# EUROPÄISCHE PATENTSCHRIFT

(11) **EP 4 164 852 B1**
(45) Veröffentlichungstag und Bekanntmachung des Hinweises auf die Patenterteilung: **15.04.2026**
(21) Anmeldenummer: 21733958.9
(22) Anmeldetag: 16.06.2021
(51) Int. Cl.: B29C 41/28, B29C 41/32, B05D 1/40, B05D 7/00

(54) **FOLIENVERBUND UND DESSEN HERSTELLUNG DURCH EINE BESCHICHTUNGSANLAGE**
FILM COMPOSITE AND ITS PRODUCTION BY A COATING SYSTEM
FILM COMPOSITE ET SA PRODUCTION PAR UN SYSTEME DE REVETEMENT

(30) Priorität: 16.06.2020 DE 102020115796
(43) Veröffentlichungstag der Anmeldung: 19.04.2023
(73) Patentinhaber: Kleiberit SE & Co. KG, 76356 Weingarten (DE)
(72) Erfinder: BECKER-WEIMANN, Klaus, 76530 Baden-Baden (DE); FANDREY, Jens, 75180 Pforzheim (DE)
(74) Vertreter: Büchel, Edwin
(86) Internationale Anmeldenummer: PCT/EP2021/066212
(87) Internationale Veröffentlichungsnummer: WO 2021/255080

(56) Entgegenhaltungen:
- EP-A1- 0 438 773
- EP-A1- 2 272 663
- EP-A1- 2 799 155
- WO-A1-2010/112511
- US-A- 5 552 227
- US-A1- 2016 130 467
- US-A1- 2016 200 092
- US-A1- 2019 283 490

## Beschreibung

Die vorliegende Erfindung betrifft ein Verfahren zur Herstellung eines Folienverbundes mit einer Reaktiv-Schmelzmasse-Schicht auf Polyurethanbasis mit Hilfe einer Beschichtungsanlage sowie einen Folienverbund erhältlich durch ein solches Verfahren und dessen Verwendung.

In großem Maßstab hergestellte Kunststofffolien werden meist durch Gießen, Kalandrieren oder Extrudieren, insbesondere durch Blasformen, erzeugt. Die dabei verwendeten Materialien können variieren. Beispiele sind Celluloseacetat, Polyvinylchlorid oder Polyethylen. Kunststofffolien können einschichtig oder mehrschichtig (Folienverbund) hergestellt werden. Die bei der Herstellung verwendeten Maschinenanlagen, wie beispielsweise Extruder, sind auf hohe Produktionsmengen ausgelegt und daher vergleichsweise teuer und komplex konstruiert.

Der Trend zur Individualisierung fordert kleine Losgrößen und minimale Rüstzeiten. Häufig in Kombination mit der Möglichkeit für einen Digitaldruck. Die üblichen Verfahren fordern bei Dekor- oder Farbwechsel lange Rüstzeiten und erzeugen einen hohen Materialverlust durch den notwendigen Vorlauf. Auch besteht ein Bedarf an (Verbund)Folien mit geringer Thermosensibilität und/oder mit einer Eignung, zur Ummantelung dienen zu können.

Gerade bei Fehlen solcher Anlagen besteht ein Bedarf an Verfahren, die die Anschaffung solcher Anlagen und den damit verbundenen Nachteilen vermeiden und auch für geringere Produktionsmengen eine kostengünstige Variante darstellen.

Das Dokument EP 2 272 663 A1 offenbart Verfahren zur Herstellung einer Leder-Verbundfolie im Umkehrstreichverfahren, wobei ein Trägerband mit einer ersten Kunststoffmasse beschichtet, die erste Kunststoffmasse in einer nachfolgenden Wärmebehandlung ausgehärtet und danach auf diese erste Kunststoffschicht eine zweite Kunststoffmasse als Kleberschicht aufgetragen wird. Auf die noch reaktive Kleberschicht wird ein Leder aufgetragen und nach ausreichender Trocknung/Ausreaktion der entstandenen Leder-Verbundfolie aus Kunststoff und Lederschichten wird das Trägerband abgezogen.

Das Dokument US 2016/130467 A1 offenbart eine Lackierungsersatzfolie ("paint replacement film") mit einer Polymerschicht umfassend ein Polyurethan hergestellt aus einer Formulierung enthaltend mindestens ein blockiertes Isocyanat. Die Lackierungsersatzfolie umfasst eine Deckschicht und die Formulierung umfasst mindestens zwei Polyole in einem OH-Gewichtsäquivalent-verhältnis im Bereich von 4,5:1 bis 1:4,5. Die Formulierung kann ein Färbemittel umfassen und das Polyurethan kann eine Glasübergangstemperatur (Tg) unter 42°C aufweisen. Ebenfalls offenbart wird ein Verfahren zur Herstellung einer Lackierungsersatzfolie durch Bereitstellen einer Trägerschicht ("backing layer"), Bereitstellen der flüssigen Formulierung, Gießbeschichten der Trägerschicht mit der flüssigen Formulierung und Gelieren der flüssigen Formulierung, wodurch eine Polymerschicht gebildet wird, die Polyurethan umfasst.

Das Dokument EP 2 799 155 A1 offenbart ein Verfahren zur Erzeugung einer fugenlosen Hochglanzoberfläche auf mindestens einem Teil einer gegebenenfalls beschichteten Trägerfläche mit angrenzender Kante eines Gegenstandes, sowie derart erhältliche Gegenstände.

Das Dokument WO 2010/112511 A1 offenbart einen Gegenstand, dessen Oberfläche zumindest teilweise lackiert oder bedruckt ist sowie Verfahren zum Lackierung bzw. Bedrucken des Gegenstandes, wobei eine Haftvermittlerschicht enthaltend eine Reaktiv-Schmelzmasse verwendet wird.

Eine Aufgabe der vorliegenden Erfindung liegt somit darin, ein solches Verfahren und daraus erzeugte Folien bereitzustellen.

Die Aufgabe wird gelöst durch ein Verfahren zur Herstellung eines Folienverbundes mit einer Reaktiv-Schmelzmasse-Schicht auf Polyurethanbasis mit Hilfe einer Beschichtungsanlage die Schritte enthaltend
a) gegebenenfalls Aufbringen einer Grundierung auf einem Trägermaterial;
b) Aufbringen der Reaktiv-Schmelzmasse-Schicht auf Polyurethanbasis auf die Grundierung oder direkt auf das Trägermaterial;
c) Aufbringen einer Lackschicht auf der Reaktiv-Schmelzmasse-Schicht auf Polyurethanbasis zum Erzeugen des Folienverbundes auf dem Trägermaterial;
d) gegebenenfalls Prägen des Folienverbundes auf dem Trägermaterial;
e) Trennen des Folienverbundes von dem Trägermaterial.

Die Aufgabe wird ebenfalls gelöst durch einen Folienverbund (Verbundfolie) erhältlich durch das erfindungsgemäße Verfahren. Der erfindungsgemäße Folienverbund ist beispielsweise als Ummantelungs- oder Kaschiermaterial geeignet. Demzufolge ist ein weiterer Aspekt der vorliegenden Erfindung die Verwendung eines erfindungsgemäßen Folienverbundes zur Ummantelung oder zum Kaschieren.

Überraschenderweise hat sich gezeigt, dass durch den Einsatz von reaktiven Schmelzmassen ein Folienverbund erhalten werden kann, der günstig und einfach unter Verwendung einer Beschichtungsanlage produziert werden kann. Thermoplastische Folien zeigen bei der Weiterverarbeitung eine gewisse Thermosensibilität in Abhängigkeit ihrer chemischen Basis und Orientierung. Speziell bei Beschichtungs- oder Verklebungsprozessen, wie dem Hotcoating, bei denen die Folie durch Temperatur (Schmelzmasse, Lampen, Trocknung, etc.) und/oder mechanische Einflüsse (Wickelprozesse, Walzenquetschung, etc.) belastet werden, kann dies zu Faltenbildung und Dimensionsänderungen führen.

Gleichzeitig werden Folien häufig in Ummantelungsprozessen eingesetzt, bei denen eine möglichst hohe Flexibilität gefordert ist. Thermoplastische Folien, die in ihrer Thermosensibilität verbessert werden, zeigen häufig geringe Flexibilität. Überraschenderweise hat sich gezeigt, dass diese Nachteile durch einen erfindungsgemäßen Folienverbund mit reaktiven Schmelzmassen vermieden oder zumindest verringert werden können. Das Handling mit sehr thermosensiblen Folien entfällt. Der hergestellte Folienverbund ist nicht thermoplastisch und dennoch zeigt er maximale Flexibilität.

In Schritt a) des erfindungsgemäßen Verfahrens erfolgt gegebenenfalls das Aufbringen einer Grundierung auf einem Trägermaterial. Als Ergebnis des Aufbringens der Grundierung auf dem Trägermaterial wird auf diesem eine Grundierungsschicht erzeugt. Diese Schicht kann ein- oder mehrschichtig ausgestaltet werden. Demzufolge kann der Grundierungsschritt a) selbst ein- oder mehrstufig erfolgen.

Eine solche Grundierung muss jedoch nicht durchgeführt werden. Vorteilhaft ist jedoch, wenn die Grundierung vorgesehen ist. Die Grundierung kann durch dem Fachmann bekannte Verfahren durchgeführt werden. Hierbei eignen sich dem Fachmann bekannte Mittel einer Beschichtungsanlage, wie beispielsweise eine Auftragswalze oder Schlitzdüse der Beschichtungsanlage. Demzufolge ist ein weiterer Aspekt der vorliegenden Erfindung ein erfindungsgemäßes Verfahren, wobei das Aufbringen der Grundierung durch eine Auftragswalze oder Schlitzdüse der Beschichtungsanlage erfolgt.

Sofern eine Grundierung vorhanden ist, kann diese als Trennmittel dienen. Dies ermöglicht ein besonders einfaches Abtrennen des Folienverbundes in Schritt e).

Weiterhin ist bevorzugt, wenn es sich bei der Grundierungsschicht um eine farbgebende Schicht oder eine Opazität erzielende Schicht handelt. Sofern die Grundierung mehrstufig erfolgt und sich so eine mehrschichtige Grundierungsschicht ergibt, ist es bevorzugt, wenn wenigstens eine Schicht der Grundierung eine solche farbgebende oder eine Opazität erzeugende Schicht handelt. Demzufolge ist ein weiterer Aspekt der vorliegenden Erfindung, dass das Aufbringen der Grundierung zumindest eine farbgebende Schicht oder eine Opazität erzielende Schicht ausbildet. Vorzugsweise handelt es sich bei der Grundierung um einen Lack, insbesondere ein UV härtender oder ein Wasser basierter oder ein sowohl UV härtender als auch ein Wasser basierter Lack. Die Opazität wird in der Regel durch Titandioxid erzielt. Die Grundierung kann in ihrer Funktion als Basis zur Dekorgebung für diverse Farbgebungsverfahren optimiert sein, wie z.B. bezüglich Haftung von Pigmenten und idealer Oberflächenspannung für die Benetzung mit Drucktinten.

Die Grundierung kann jedoch ebenfalls durchsichtig ausgestaltet sein. Es ist ebenfalls möglich, dass die Grundierung bei Einsatz des Folienverbundes beispielsweise bei der Ummantelung die Außenfläche darstellt, so dass die Lackschicht in Schritt c) der Oberfläche des Ummantelungsgegenstands zugewandt ist.

Daher ist es ebenfalls möglich, dass die Grundierung eine geprägte Struktur aufweisen kann. Diese kann beispielsweise dadurch erzeugt werden, dass die Oberfläche des Trägermaterials mit Hilfe eines digitalen 3D-Drucks die entsprechend negative Struktur aufgedruckt wird, die dann durch Beschichtung mit der Grundierung auf diese übertragen wird. Weiterhin kann nach Schritt b) und vor Schritt c) ein Dekor aufgedruckt werden, das sich an die geprägte Struktur anpasst. Diese Anpassung kann beispielsweise durch Datensynchronisation erfolgen ("digital synchronisierte 3D Textur"). Allgemein wird eine zum Dekor passende Prägung dieser Art als "Synchronpore" bezeichnet oder es wird auch der Begriff "EIR" (embossed-inregister) verwendet. Auch der Begriff "true texture" wird im Stand der Technik verwendet.

Sofern eine Grundierung erfolgt, kann vor deren Aufbringen eine reaktivierbare Klebstoffschicht aufgebracht werden. Dann kann eine solche Klebstoffschicht auf der Trägeroberfläche aufgebracht werden. Hierbei kann die Klebstoffschicht als Trennmittel dienen, um eine Ablösbarkeit des Folienverbundes zu ermöglichen.

Demzufolge ist weiterhin bevorzugt, dass vor Aufbringen der Grundierung die Oberfläche des Trägermaterials mit einer reaktivierbaren Klebstoffschicht versehen wird oder diese Klebstoffschicht als Grundierung dient. Dies ist insbesondere dann bevorzugt, wenn vor Schritt b) eine Dekorschicht aufgebracht wird.

Die Klebstoffschicht kann ein- oder mehrstufig aufgebracht werden und somit selbst eine oder mehrere Schichten aufweisen. Es ist ebenso möglich, dass die Klebstoffschicht selbst als Grundierung dient. Die Klebstoffschicht kann eine Dispersion sein, die über Temperatur reaktiviert wird, wie zum Beispiel eine Polyurethan-Dispersion. Bevorzugt wird ein thermoplastischer Schmelzklebstoff nach dem Stand der Technik verwendet der über Temperatur im Kaschierprozess reaktiviert wird. Dabei kann es sich z.B. um einen Schmelzklebstoff auf Basis Ethylenvinylacetat-Copolymer (EVA), ataktisches poly-alpha-Olefin (APAO), Metallocene-Polyolefin (mPO), Polyamid oder Polyester handeln. Es kann auch ein reaktiver Schmelzklebstoff auf Polyurethan oder Polyolefin-Basis zum Einsatz kommen, der in einem definierten Zeitfenster über Temperatur reaktiviert wird oder durch das Trägermaterial vor Luftfeuchtigkeit geschützt ist. Weitere Alternativen sind gekapselte Klebstoffsysteme oder zweikomponentige Systeme, die über Temperatur, Druck oder Applikation einer weiteren Komponente im Kaschierprozess reaktiviert werden.

Vor Schritt b) des erfindungsgemäßen Verfahrens kann eine Dekorschicht aufgebracht werden. Diese kann beispielsweise durch Direktdruck oder Digitaldruck, vorzugsweise durch Digitaldruck, erzeugt werden.

In Schritt b) wird eine Reaktiv-Schmelzmasse-Schicht auf Polyurethanbasis auf die Grundierung oder direkt auf das Trägermaterial aufgebracht. Diese steht damit direkt mit der Grundierungsschicht oder der Oberfläche des Trägermaterials (Träger) in Kontakt. Es ist jedoch auch möglich, dass eine oder mehrere weitere Schichten durch Zwischenschritte erzeugt werden, so dass diese Schicht(en) zwischen Trägeroberfläche und Reaktiv-Schmelzmasse-Schicht liegen. Beispielsweise kann eine Dekorschicht vorhanden sein, die beispielsweise sich zwischen Reaktiv-Schmelzmasse-Schicht und Grundierung befindet.

Die Reaktiv-Schmelzmasse-Schicht kann einlagig oder mehrlagig aufgetragen werden. Dementsprechend kann die gesamte Reaktiv-Schmelzmasse-Schicht ein- oder mehrschichtig sein.

Die reaktive Polyurethan-Schmelzmasse wird vorzugsweise aus isocyanatreaktiven Polymeren und Polyisocyanaten sowie ggf. Additiven hergestellt.

Die reaktive Polyurethan-Schmelzmasse ist ein bei Raumtemperatur festes Produkt, welches emissions- und lösungsmittelfrei ist. Die Temperatur bei der die reaktive Schmelzmasse aufgetragen wird, liegt in einem Bereich von 60°C bis 150°C, vorzugsweise von 100°C bis 140°C, wobei das Produkt eine Viskosität nach BROOKFIELD bei 120°C im Bereich von 1.000 mPas bis 30.000 mPas, vorzugsweise 4.000 mPas bis 10.000 mPas besitzt. Die Dichte der reaktiven Schmelzmasse liegt üblicherweise bei 1,1 g/m². Vorteilhaft weist die reaktive Schmelzmasseschicht selbst im ausgehärteten Zustand eine gewisse Restelastizität auf. Die Aushärtung neben einer physikalischen Erstarrung erfolgt zumindest teilweise -insbesondere ausschließlich- durch Feuchtigkeitshärtung, insbesondere mit Hilfe der Luftfeuchtigkeit. Die vollständige Aushärtung kann mehrere Tage beanspruchen. Die reaktive Schmelzmasse wird daher in heiß-flüssigen Zustand appliziert und es ist nicht erforderlich, dass vor Aufbringen der Lackschicht eine vollständige Aushärtung erfolgt.

Bevorzugte isocyanatreaktive Polymere sind überwiegend lineare aber auch verzweigte Polyester insbesondere di- aber auch trifunktionelle Polyethylen- und Polypropylenglykole, Polytetrahydrofurane sowie Polyamide und Mischungen daraus. Dabei können auch die entsprechenden Copolymere, insbesondere Blockcopolymere, eingesetzt werden.

Besonders bevorzugt sind Polyesterpolyole, die flüssig, glasartig amorph oder kristallin sein können und ein zahlenmittleres Molekulargewicht zwischen 400 und 25000 g/mol, insbesondere zwischen 1000 und 10000 g/mol, besonders bevorzugt zwischen 2000 und 6000 g/mol, aufweisen. Derartige besonders geeignete Polyesterpolyole sind beispielsweise unter der Bezeichnung Dynacoll^{®} der Degussa AG als Handelsprodukte erhältlich. Weitere geeignete Polyesterpolyole sind Polycaprolactonpolyester, Polycarbonatpolyester sowie Polyesterpolyole auf der Basis von Fettsäuren.

Weitere bevorzugte isocyanatreaktive Polymere sind überwiegend lineare oder leicht verzweigte Polyalkylenoxide, insbesondere Polyethylenoxide, Polypropylenoxide oder Polytetrahydrofurane (Polyoxytetramethylenoxide), mit einem zahlenmittleren Molekulargewicht zwischen 250 und 12000 g/mol, bevorzugt mit einem zahlenmittleren Molekulargewicht zwischen 500 und 4000 g/mol.

Das Polyisocyanat ist bevorzugt eine Substanz oder eine Mischung von Substanzen, ausgewählt aus aromatischen, aliphatischen oder cycloaliphatischen Polyisocyanaten mit einer Isocyanatfunktionalität zwischen 1 und 4, bevorzugt zwischen 1,8 und 2,2, besonders bevorzugt mit der Isocyanatfunktionalität 2.

Besonders bevorzugt ist das Polyisocyanat mit einer Molekularmasse < 500 eine Substanz oder eine Mischung von Substanzen aus der nachfolgenden Aufzählung: Diisocyanatodiphenylmethane (MDIs), insbesondere 4,4'-Diisocyanatodiphenylmethan und 2,4'-Diisocyanatodiphenylmethan sowie Mischungen verschiedener Diisocyanatodiphenylmethane; hydriertes 4,4'-MDI (bis 4-isocyanatocyclohexyl)methan und hydriertes 2,4'-MDI Tetramethylxylylendiisocyanat (TMXDI); Xylylendiisocyanat (XDI); 1,5-Diisocyanatonaphthalin (NDI); Diisocyanattoluole (TDIs), insbesondere 2,4-Diisocyanatotoluol, sowie TDI-Urethdione, insbesondere dimerem 1-Methyl-2,4-phenylendiisocyanat (TDI-U), und TDI-Harnstoffe; 1-Isocyanato-3-isocyanatomethyl-3,5,5-trimethylcyclohexan (IPDI) und dessen Isomere und Derivate, insbesondere Di-, Tri- und Polymerisate, sowie IPDI-Isocyanurat (IPDI-T); 3,3'-Dimethylbiphenyl-4,4'-diisocyanat (TODI); 3,3'-Diisocyanato-4,4'-dimethyl-N,N'-diphenylharnstoff (TDIH); Hexamethylen-1,6-diisocyanat (HDI) und Methylen-bis-(4-isocyanatocyclohexan) (H₁₂MDI).

Bevorzugt werden lichtechte, aliphatische Polyisocyanate eingesetzt.

Bevorzugt werden als Polyisocyanat isocyanatterminierte Prepolymere mit geringen Gehalt an Restmonomeren eingesetzt, insbesondere dann wenn Prepolymere auf Basis von aliphatischen Isocyanaten verwendet werden. Vorausgesetzt sie sind monomerarm, d.h. ihr Restmonomergehalt ist nicht größer als 0,5 Gew.-%, bevorzugt kleiner als 0,3 Gew.-%, besonders bevorzugt kleiner als 0,1 Gew.-%. Geeignet sind insbesondere Umsetzungsprodukte von Polyetherpolyolen, bevorzugt von Polypropylenglykolen, und Polyesterpolyolen mit Polyisocyanaten, insbesondere Diisocyanato-diphenylmethanen, Diisocyanato-toluolen, Diisocyanato-hexan, Isocyanato-3-isocyanatomethyl-3,5,5-trimethylcyclohexan (IPDI) Hexamethylen-1,6-diisocyanat (HDI) und/oder H₁₂MDI sowie den Derivaten dieser Isocyanate. Besonders bevorzugt sind dabei Präpolymere auf Basis aliphatischer Isocyanate wie HDI und IPDI.

Solche monomerarmen, isocyanatterminierten Prepolymere werden durch Umsetzung von Polyetherpolyolen mit einem Überschuss an Polyisocyanaten hergestellt. Nach der Umsetzung wird das noch vorhandene monomere Isocyanat gegebenenfalls mittels Dünnschichtverdampfer entfernt.

Die reaktive Polyurethan-Schmelzmasse kann auch gemäß der Patenschrift EP1831277B2 in einem zweistufigen Prozess hergestellt werden. Dazu werden die Isocynatreaktiven Polymer in einem ersten Schritt mit einem molaren Unterschuss eines Polyisocyanates mit Molekulargewicht < 500 g/mol umgesetzt und dann in einer 2. Stufe das Präpolymer der ersten Stufe in einem molaren Überschuss mit den oben beschriebenen isocyanatterminierte Prepolymere umgesetzt.

In einer vorteilhaften Verfahrensweise wird zur Herstellung des thermoplastischen Polyurethans in der ersten Verfahrensstufe das isocyanatreaktive Polymer oder die Mischung der isocyanatreaktiven Polymere bei 120°C unter Vakuum von Wasser befreit. Danach wird bei 80 bis 140°C, bevorzugt bei 100 bis 120°C, mit dem Polyisocyanat umgesetzt.

Die Umsetzung in den Verfahrensstufen 1 und/oder 2 wird bevorzugt bei einer Temperatur im Bereich von 80 bis 140°C, insbesondere von 100 bis 120°C, durchgeführt.

Die so hergestellte reaktive Polyurethanzusammensetzung wird anschließend bevorzugt in wasserdampfundurchlässige Gebinde abgefüllt.

Die reaktive Polyurethan-Schmelzmasse kann auch gemäß WO 2012/084823 A1 abriebfeste Füllstoffe enthalten, wenn in der Anwendung wie häufig im Fußbodenbereich eine erhöhte Abriebfestigkeit gefordert ist. Demzufolge kann die Schmelzmasse eine anorganische Füllstoffkomponente aufweisen, wobei die Füllstoffkomponente Teilchen mindestens eines Füllstoffes enthält, die eine Härte nach Mohs von mindestens 6, vorzugsweise mindestens 7, aufweisen. Die Teilchen des mindestens einen Füllstoffes weisen vorzugsweise einen mittleren Teilchendurchmesser im Nanopartikelbereich (< 1 µm) oder im Bereich von 3,5 µm bis 56 µm auf. Der mindestens eine Füllstoff kann beispielsweise ein Metalloxid, Siliziumdioxid, Metallcarbid, Siliciumcarbid, Metallnitrid, Siliciumnitrid oder Bornitrid sein. Geeignete Materialien sind Korund, Schmirgel, ein Spinell und/oder Zirkonoxid.

Die reaktive Schmelzmasse kann auch entsprechend WO 2006/106143 A1 aus einer sowohl feuchtigkeits- als auch mit UV licht härtenden Schmelzmasse bestehen.

Insbesondere kann die reaktive Polyurethanzusammensetzung auch Hilfsstoffe, insbesondere Füllstoffe, nicht reaktive Polymere, klebrigmachende Harze, Wachse, Weichmacher, Additive, Lichtschutzmittel, Verlaufsmittel, Beschleuniger, Haftvermittler, Pigmente, Katalysatoren, Stabilisatoren und/oder Lösungsmittel enthalten.

Die nicht-reaktiven Polymere können bevorzugt Polyolefine, Polyacrylate, und Polymere auf Basis Ethylen und Vinylacetat mit Vinylacetat-Gehalten von 0 bis 80 Gew.-%, vorzugsweise 0.1 bis 801 Gew.-%, oder Polyacrylate sowie Mischungen hiervon sein.

Die so hergestellte reaktive Polyurethanzusammensetzung weist vorzugsweise eine Viskosität von 2.000 mPas bis 100.000 mPas bei 120°C, bevorzugt von 5.000 bis 50.000 mPas, bei 120°C auf.

Neben der reaktiven Polyurethan-Schmelzmasse, kann auch eine reaktive Schmelzmasse auf Polyolefin-Basis verwendet werden. Diese härtet über die Reaktion von Silangruppen mit Luftfeuchtigkeit aus.

Vorzugsweise ist die Reaktiv-Schmelzmasse-Schicht eine feuchtigkeitshärtende Schicht. Weiterhin ist bevorzugt, dass diese eine reaktive Polyurethan-Schmelzmasse (PUR-SK) ist, die vorzugsweise aus isocyanatreaktiven Polymeren und Polyisocyanaten sowie gegebenenfalls Additiven erhältlich ist. Insbesondere ist ein lichtechter PUR-SK wie oben beschrieben bevorzugt.

Die Reaktiv-Schmelzmasse kann Additive, wie beispielsweise Füllstoffe, insbesondere abriebfeste Füllstoffe, wie oben beschrieben, aufweisen. Die anorganische Füllstoffkomponente weist vorzugsweise einen Anteil im Bereich von 5 Gew.-% bis 60 Gew.-% bezogen auf das Gesamtgewicht der Reaktiv-Schmelzmasse auf. Weiter bevorzugt liegt der Anteil im Bereich von 10 Gew.-% bis 50 Gew.-%, weiter mehr bevorzugt im Bereich von 15 Gew.-% bis 30 Gew.-%.

Vorzugsweise weist die Reaktiv-Schmelzmasse-Schicht eine Dicke im Bereich von 20 µm bis 150 µm auf.

Das Aufbringen der Reaktiv-Schmelzmasse-Schicht kann durch dem Fachmann bekannte Verfahren aufgebracht werden. Geeignete Mittel der Beschichtungsanlage zum Erzeugen einer Reaktiv-Schmelzmasse-Schicht sind bekannt. Vorzugsweise erfolgt das Aufbringen der Reaktiv-Schmelzmasse-Schicht durch eine Auftragswalze mit oder ohne Glättwalze oder Schlitzdüse mit oder ohne Rollstab der Beschichtungsanlage.

In Schritt c) des erfindungsgemäßen Verfahrens wird eine Lackschicht aufgebracht. Durch das Aufbringen der Lackschicht auf der Reaktiv-Schmelzmasse-Schicht auf Polyurethanbasis kann der Folienverbund auf dem Trägermaterial erzeugt werden. Die Lackschicht kann einoder mehrstufig aufgebracht werden. Dementsprechend ist eine ein- oder mehrschichtiger Aufbau der Lackschicht möglich. Vorzugsweise wird jedoch die Lackschicht einlagig aufgebracht Insbesondere ist bevorzugt, dass die Schmelzmasse-Schicht und die Lackschicht jeweils einlagig aufgetragen werden.

Vorzugsweise weist die Lackschicht eine Dicke von 5 µm bis 25 µm auf.

Der Lack besitzt eine für Rollmaterialien erforderliche Flexibilität. Er kann den Glanzgrad des Folienverbundes maßgeblich bestimmen. Er kann für eine physikalische Mattierung (Excimer) optimiert sein - bis hin zu expliziten Hochglanzeigenschaften (Verlaufeigenschaften, Eignung für Inert Kalanderverfahren (ICC). Gleichzeitig kann durch die ICC Technologie eine Prägung der Lackschicht oder des gesamten Folienverbundes erfolgen.

Der Lack kann derart abgestimmt werden, dass dieser chemisch-physikalische Eigenschaften in Abhängigkeit des Anwendungsgebietes des Folienverbundes (Kratzfestigkeit, Außenbewitterung, o.ä.) aufweist. Solche Lacke sind im Stand der Technik bekannt.

Vorzugsweise handelt es sich bei dem Lack um einen Lack, der mittels Elektronenstrahlung oder UV-Strahlung vernetzt werden kann.

Als durch Bestrahlung polymerisierbare Komponenten können dabei alle Verbindungen verwendet werden, die vorzugsweise eine oder mehrere durch Elektronen- und/oder UV-Strahlung polymerisierbare funktionelle Gruppen enthalten. Bevorzugt werden dabei Verbindungen mit olefinisch ungesättigten funktionellen Gruppen verwendet.

Beispiele für solche Verbindungen sind Styrol, 1-Methylstyrol, Vinylacetat, Vinylchlorid, konjugierte Diene wie Butadien und Isopren, Vinylether von C1-C20-Alkanolen aber auch Arylnitril, Vinylcaprolactam, n Vinylformamid, C1-C4-Acrylsäure und methacrylsäurester wie Methyl(meth)acrylat, Ethyl(meth)acrylat, n-Propyl(methacrylat) Isobornylacrylat (IBOA) und dergleichen. Weiterhin können auch höherfunktionelle Verbindungen wie Trimethyloltriacrrylat (TMTPA), ethoxyliertes Trimethyloltriacrrylat, propoxyliertes Glyceroldiacrylat, Butandioldiacrylat (BDDA), Hexandioldiarylat (HDDA), Tripropylenglycoldiacrylat (TPGDA), Dipropylenglycoldiacrylat (DPGDA), Pentaerythritol triacrylate (PETIA) und Pentaerythritoltetraacrylate (PETTA) eingesetzt werden.

Daneben können auch sog. Oligomere verwendet werden. Unter Oligomeren versteht man z.B. aliphatische und aromatisch Epoxyacrylate, aliphatische und aromatische Urethanacrylate, Polyesteracrylate, Polyetheracrylate und amin-funktionalisierte Polyetheracrylate sowie ungesättigte Polyesterharze.

Diese Oligomere sind aus dem Stand der Technik bekannt und zum Beispiel von der Fa. Rahn unter dem Markennahmen Genomer^{®} der Fa. Allnex unter dem Markennamen Ebecryl^{®}, der Fa. Miwon unter dem Markenname Miramer^{®} der Fa. Sartomer unter der CN-Reihe oder der Fa. BASF unter dem Markennamen Laromer l^{®} erhältlich.

Vorzugsweise können als ein Photoinitiator für die radikalische Reaktion Stoffe und Stoffgemische eingesetzt werden, die bei Bestrahlung mit Licht mit einer Wellenlänge von etwa 240 bis etwa 480 nm dazu in der Lage sind, eine radikalische Polymerisation olefinisch ungesättigter Doppelbindungen zu initiieren. Geeignete Photoinitiatoren sind zum Beispiel in "Advances in Polymer Science, Volume 14, Springer Berlin 1974 beschrieben.

Beispielsweise sind dies alle Norrish-Type I fragmentierenden Substanzen. Beispiele hierfür sind Benzophenon, Campherchinon, Quantacure (Hersteller: International Bio-Synthetics), Photoinitiatoren der Omnirad^{®}-Reihe (Fa. IGM), der Genocure^{®}-Reihe (Fa. Rahn) und der Speedcure TM^{®} -Reihe (Hersteller Lambson).

Besonders geeignete Photoinitiatoren sind solche aus der Klasse der Benzoine, der Phenylhydroxyalkonone, der alpha-Hydroxyketone, der alpha-Aminoketone, der Phenylglyoxilate, der Monoacylphosphine (MAPO) und der Bisacylphosphine (BAPO).

Besonders geeignete Bespiele für Photoinitiatoren sind Speedcore 73, Ominirad 819, Speedcure MBF und Ominirad TPO.

Besonders geeignet sind auch polymerisierbare Photoinitiatoren wie sie beispielsweise von der Fa. Rahn unter dem Handelsnamen Genopol^{®} angeboten werden.

Der Lack kann transparent oder pigmentiert sein. Ist der Lack pigmentiert, so enthält er als Füllstoff vorzugsweise Titandioxid. Der Lack kann aber auch andere Füllstoffe wie z.B. Kreide, Talkum sowie Füllstoffe zur Erhöhung der Kratz- und Mikrokratzbeständigkeit wie z.B. Glaskugeln oder Nanopartikel enthalten. Weiterhin kann der Lack auch farbige Pigmente enthalten.

Der Lack kann des Weiteren auch lackübliche Additive, die dem Fachmann bekannt sind wie Entschäumer, Entlüfter, Netzmittel, Dispergierhilfsmittel, Verlaufshilfsmittel, Antioxidanzien und UV-Stabilisatoren usw. enthalten.

Der Lack hat vorzugsweise eine Viskosität nach Brookfield (20°C) von 200 mPas - 20.000 mPas, bevorzugt von 500 mPas-10.000 mPas.

Sofern eine Grundierung (Schritt a) erfolgt und hierfür ein Lack verwendet wird, kann dieser ebenfalls die oben aufgeführten Eigenschaften aufweisen.

Das Trägermaterial kann eine Metallfolie, ein CPL (Continous Pressure Laminate) Schichtstoff, Melaminpapier, Trennpapier, Silikon beschichtete Bahnenware oder eine Kunststofffolie sein oder zumindest eines dieser Materialien oder mehrere von diesen enthalten. Insbesondere ist eine Kunststofffolie bevorzugt. Bei der Wahl des Trägermaterials sind hohe Dimensionsstabilität und mechanische Festigkeit bei thermischer Belastung vorteilhaft. Auch die Abtrennbarkeit von der Grundierung oder der Reaktiv-Schmelzmasse-Schicht kann die Wahl des Trägermaterials berücksichtigt werden.

Vorzugsweise weist das Trägermaterial eine Dicke von 30 µm bis 400 µm auf. Es ist jedoch auch möglich, dass das Trägermaterial ein Förderband der Beschichtungsanlage ist.

Das Trägermaterial kann gleichzeitig ein Träger von Druckfarben sein die im Transferdruckverfahren (Sublimation) in die Reaktiv-Schmelzmasse-Schicht eingebracht werden.

Weiterhin kann als Schritt d) das Prägen des Folienverbundes auf dem Trägermaterial vorgesehen sein. Ein solcher Schritt kann jedoch ebenfalls entfallen. Das Prägen kann durch eine Prägewalze der Beschichtungsanlage oder strukturgebende Bahnenware die aufgepresst wird erfolgen.

In Schritt e) erfolgt das Trennen des Folienverbundes von dem Trägermaterial. Vorzugsweise erfolgt das Trennen des Folienverbundes von dem Trägermaterial durch Abziehen nach Kristallisation oder Ausreagieren der Reaktiv-Schmelzmasse-Schicht. Vorzugsweise kann nach Abtrennen in Schritt e) das Trägermaterial wieder im erfindungsgemäßen Verfahren, gegebenenfalls nach Reinigung, wieder eingesetzt werden. Dementsprechend ist bevorzugt, dass das Trägermaterial für das erfindungsgemäße wiederverwendet wird.

Vorzugsweise handelt es sich bei der Beschichtungsanlage um eine Rolle-zu-Rolle Anlage. Unter dem Begriff Rolle-zu-Rolle Anlage ist eine Verarbeitungsanlage zu verstehen, bei der Rollenware in die Anlage, im Rahmen der vorliegenden Erfindung das Trägermaterial eingespeist wird und nach Bearbeitung das gewünschte Produkt, im Rahmen der vorliegenden Erfindung also der Folienverbund, ebenfalls als Rolle anfällt.

Sowohl Folienverbund als auch Trägermaterial fallen vorzugsweise wieder als Rolle an. Die Materialien können über eine Kantensteuerung präzise auf Wechselhülsen aufgewickelt werden, so dass diese über marktübliche Aufnahmen in Kaschierprozessen weiterverarbeitet werden können.

Demzufolge fällt in einer bevorzugten Ausführungsform nach Trennen in Schritt e) des erfindungsgemäßen Verfahrens der erfindungsgemäße Folienverbund als Rolle an, die durch Aufwickeln erhalten werden kann. Ebenso ist bevorzugt, dass der Träger vor Schritt a) als Rolle vorliegt, die zur Bearbeitung des Trägers in der Beschichtungsanlage abgewickelt wird.

Das erfindungsgemäße Verfahren kann weitere Schritte enthalten. Beispielsweise ist ein Glätten der Reaktiv-Schmelzmasse-Schicht nach Schritt b) und vor Schritt c) möglich. Auch ist mindestens einer der folgenden Schritte möglich:
- Physikalische Mattierung des Lackes (Excimer Lampe)
- Glättung und Aushärtung des Lackes über ein Inert-Kalander-Verfahren
- Ein Aufteilen des anfallenden Folienverbundes in verschiedene Breiten kann über eine nachgeschaltete Schneideeinrichtung (z.B. mit Rollmessern) erfolgen.
- Ein Einstreuen von Partikeln nach dem Auftrag der Reaktiv-Schmelzmasse-Schicht zur Erzeugung einer "Anti-slip" Oberfläche.

Der erfindungsgemäße Folienverbund kann beispielsweise zur Ummantelung oder zum Kaschieren verwenden werden. Hierbei kann der Folienverbund vorher mit einer Klebstoffschicht versehen werden. Geeignete Klebstoffe sind beispielsweise Schmelzklebstoffe, die thermoplastisch oder reaktive sein können, insbesondere PUR-SK, Dispersionen und Haftschmelzklebstoffe. Ein Auftrag ist beispielsweise über Walzen oder Schlitzdüsen möglich.

Der hergestellte Folienverbund kann als Ersatz für herkömmliche Folien dienen. Ein Anwendungsbereich könnte bei Fußböden liegen. Hier wäre insbesondere ein Ersatz von TPU-, PET- oder PVC Folien möglich.

Auch Außenanwendungen sind denkbar, insbesondere als Ersatz von PMMA Folien, beispielsweise als Fensterfolien, für Fassaden oder Profilen. Weitere Anwendungsmöglichkeiten sind Terrassenbeläge und Möbel, insbesondere zur Erzeugung eines Softtouch und mit Texturen.

Die Erfindung wird anhand der nachfolgenden Figur und Beispiele näher erläutert, ohne dass die vorliegende Erfindung auf diese beschränkt wäre.

### Beispiele

### Beispiel 1 Fußboden-Folie: Hoch abriebfest, spaltfest, Verklebung und Prägung über Reaktivierung

Ein beispielhafter erfindungsgemäßer Folienverbund weist folgenden Schichtaufbau auf:
1. Thermisch reaktivierbarer Klebstoff, opak (z.B. EVA SK Kleiberit 743.6)
2. Grundierung: opak, weiß, UV härtend (z.B. UV Lack Kleiberit 653.1.33)
3. Digitaldruck: UV härtende Druckfarben, appliziert über SinglePass Drucker
4. Reaktiv-Schmelzmasse-Schicht auf Polyurethanbasis mit Korund (z.B. PUR HotCoating Kleiberit 717.6)
5. Acryl Lack UV härtend: kratzfest, optional physikalisch mattiert (z.B. UV Lack Kleiberit 659.0.04)

Eine Weiterverarbeitung kann erfolgen: Kurztaktpressen oder Kaschieranlagen mit beheizter Kalanderwalze, Einbringen von Texturen über Pressbleche/-matrizen oder Prägewalzen.

### Beispiel 2 Terrassendiele Folie: Hoch abriebfest, spaltfest, witterungsbeständig

Ein beispielhafter erfindungsgemäßer Folienverbund weist folgenden Schichtaufbau auf:
1. Grundierung : opak, weiß, UV härtend, optimiertes Benetzungsverhalten (z.B. UV Lack Kleiberit 653.1.33)
2. Digitaldruck: UV härtende Druckfarben, appliziert über SinglePass Drucker
3. Reaktiv-Schmelzmasse-Schicht auf Polyurethanbasis , korundhaltig, mit UV Absorbern (z.B. PUR HotCoating Kleiberit 9383/627)
4. Acryl Lack UV härtend: kratzfest, witterungsbeständig, flexibel (z.B. UV Lack Kleiberit 659.2.22)
5. Prägung / Antislip Oberfläche

Eine Weiterverarbeitung kann erfolgen: Ummantelungsanlage mit PUR Schmelzklebstoff.

Es zeigt die Figur:

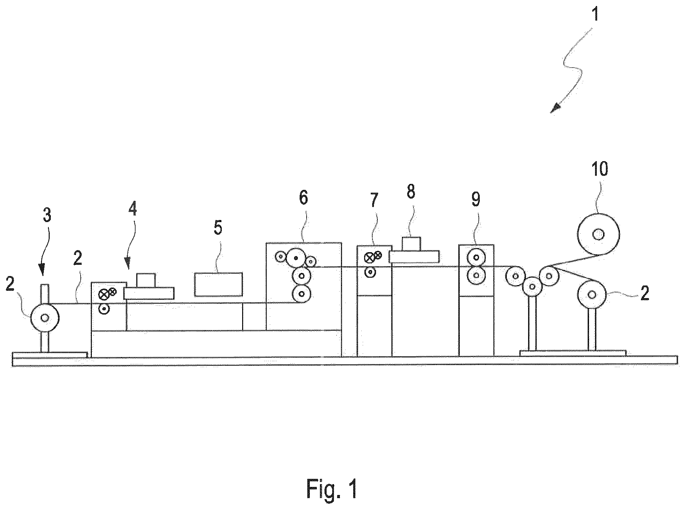

Fig. 1 eine Beschichtungsanlage zur Herstellung erfindungsgemäßer Folienverbunde

In der Beschichtungsanlage 1 wird eine Trägerfolie 2 als Trägermaterial von einer Rolleneinheit 3 einer Grundierungseinheit 4 zugeführt, in der die Trägerfolie 2 grundiert und gegebenenfalls mit reaktivierbarem Klebstoff auf der Oberfläche der Trägerfolie versehen wird. Anschließend durchläuft die Trägerfolie 2 eine Druckeinheit 5, die ein Bedrucken der grundierten Trägerfolienoberfläche ermöglicht. Anschließend wird die Trägerfolienoberfläche mit einer Reaktiv-Schmelzmasse auf Polyurethanbasis in einer nachfolgenden Beschichtungseinheit 6 beschichtet. Anschließend erfolgt das Aufbringen einer UV-Lackschicht in einer Lackiereinheit 7. Die Härtungseinheit 8 in Form einer UV-Lampe härtet den UV-Lack. Anschließend erfolgt eine Prägung in einer Prägeeinheit 9, gefolgt von der Trennung und Aufwickeln der Trägerfolie 2 und des erfindungsgemäßen Folienverbundes 10.

### Bezugszeichenliste

- 1: Beschichtungsanlage
- 2: Trägerfolie
- 3: Rolleneinheit
- 4: Grundierungseinheit
- 5: Druckeinheit
- 6: Beschichtungseinheit
- 7: Lackiereinheit
- 8: Härtungseinheit
- 9: Prägeeinheit
- 10: Folienverbund

## Patentansprüche

1. Verfahren zur Herstellung eines Folienverbundes (10) mit einer Reaktiv-Schmelzmasse-Schicht auf Polyurethanbasis mit Hilfe einer Beschichtungsanlage (1) die Schritte enthaltend
a) gegebenenfalls Aufbringen einer Grundierung auf einem Trägermaterial;
b) Aufbringen der Reaktiv-Schmelzmasse-Schicht auf Polyurethanbasis auf die Grundierung oder direkt auf das Trägermaterial;
c) Aufbringen einer Lackschicht auf der Reaktiv-Schmelzmasse-Schicht auf Polyurethanbasis zum Erzeugen des Folienverbundes (10) auf dem Trägermaterial;
d) gegebenenfalls Prägen des Folienverbundes (10) auf dem Trägermaterial;
e) Trennen des Folienverbundes (10) von dem Trägermaterial.

2. Verfahren nach Anspruch 1, **dadurch gekennzeichnet, dass** die Grundierung vorgesehen ist.

3. Verfahren nach Anspruch 1 oder 2, **dadurch gekennzeichnet, dass** die Grundierung als Trennmittel dient.

4. Verfahren nach einem der Ansprüche 1 bis 3, **dadurch gekennzeichnet, dass** die Schmelzmasse-Schicht und die Lackschicht jeweils einlagig aufgetragen werden.

5. Verfahren nach einem der Ansprüche 1 bis 4, **dadurch gekennzeichnet, dass** die Reaktiv-Schmelzmasse-Schicht eine Dicke im Bereich von 20 µm bis 150 µm aufweist.

6. Verfahren nach einem der Ansprüche 1 bis 5, **dadurch gekennzeichnet, dass** die Lackschicht eine Dicke im Bereich von 5 µm bis 25 µm aufweist.

7. Verfahren nach einem der Ansprüche 1 bis 6, **dadurch gekennzeichnet, dass** das Aufbringen der Grundierung zumindest eine farbgebende Schicht oder eine Opazität erzielende Schicht ausbildet und vorzugsweise ein Lack, insbesondere ein UV härtender oder ein Wasser basierter oder ein sowohl UV härtender als auch ein Wasser basierter Lack, ist.

8. Verfahren nach einem der Ansprüche 1 bis 7, **dadurch gekennzeichnet, dass** vor Aufbringen der Grundierung die Oberfläche des Trägermaterials mit einer reaktivierbaren Klebstoffschicht versehen wird oder diese Klebstoffschicht als Grundierung dient.

9. Verfahren nach einem der Ansprüche 1 bis 8, **dadurch gekennzeichnet, dass** vor Schritt b) eine Dekorschicht, vorzugsweise durch Digitaldruck, erzeugt wird.

10. Verfahren nach einem der Ansprüche 1 bis 7, **dadurch gekennzeichnet, dass** das Aufbringen der Grundierung durch eine Auftragswalze oder Schlitzdüse der Beschichtungsanlage (1) erfolgt.

11. Verfahren nach einem der Ansprüche 1 bis 10, **dadurch gekennzeichnet, dass** die Grundierung eine geprägte Struktur aufweist und vorzugsweise nach Schritt b) und vor Schritt c) ein Dekor aufgedruckt wird, das sich an die geprägte Struktur anpasst.

12. Verfahren nach einem der Ansprüche 1 bis 11, **dadurch gekennzeichnet, dass** das Trägermaterial eine Metallfolie, ein CPL Schichtstoff, Melaminpapier, Trennpapier, Silikon beschichtete Bahnenware oder eine Kunststofffolie ist oder zumindest enthält, insbesondere eine Kunststofffolie.

13. Verfahren nach einem der Ansprüche 1 bis 12, **dadurch gekennzeichnet, dass** das Trägermaterial eine Dicke von 30 µm bis 400 µm aufweist.

14. Verfahren nach einem der Ansprüche 1 bis 13, **dadurch gekennzeichnet, dass** das Trägermaterial ein Förderband der Beschichtungsanlage (1) ist.

15. Verfahren nach einem der Ansprüche 1 bis 14, **dadurch gekennzeichnet, dass** das Aufbringen der Reaktiv-Schmelzmasse-Schicht durch eine Auftragswalze mit oder ohne Glättwalze oder Schlitzdüse mit oder ohne Rollstab der Beschichtungsanlage (1) erfolgt.

16. Verfahren nach einem der Ansprüche 1 bis 15, **dadurch gekennzeichnet, dass** die Reaktiv-Schmelzmasse-Schicht eine feuchtigkeitshärtende Schicht ist.

17. Verfahren nach einem der Ansprüche 1 bis 16, **dadurch gekennzeichnet, dass** die Reaktiv-Schmelzmasse-Schicht eine reaktive Polyurethan-Schmelzmasse ist, die vorzugsweise aus isocyanatreaktiven Polymeren und Polyisocyanaten sowie gegebenenfalls Additiven erhältlich ist.

18. Verfahren nach einem der Ansprüche 1 bis 17, **dadurch gekennzeichnet, dass** das Prägen des Folienverbundes (10) vorgesehen ist.

19. Verfahren nach einem der Ansprüche 1 bis 18, **dadurch gekennzeichnet, dass** das Prägen durch eine Prägewalze der Beschichtungsanlage (1) erfolgt.

20. Verfahren nach einem der Ansprüche 1 bis 19, **dadurch gekennzeichnet, dass** das Trennen des Folienverbundes (10) von dem Trägermaterial durch Abziehen nach Kristallisation oder Ausreagieren der Reaktiv-Schmelzmasse-Schicht erfolgt.

21. Verfahren nach einem der Ansprüche 1 bis 20, **dadurch gekennzeichnet, dass** die Reaktiv-Schmelzmasse-Schicht zumindest einen Füllstoff enthält, insbesondere einen abriebfesten Füllstoff.

22. Verfahren nach einem der Ansprüche 1 bis 21, **dadurch gekennzeichnet, dass** die Beschichtungsanlage (1) eine Rolle-zu-Rolle Anlage ist.

23. Verfahren nach einem der Ansprüche 1 bis 22, **dadurch gekennzeichnet, dass** der Lack der Lackschicht in Schritt c) mittels Elektronenstrahlung oder UV-Strahlung vernetzt werden kann.

24. Verfahren nach einem der Ansprüche 1 bis 23, **dadurch gekennzeichnet, dass** das Trägermaterial für das Verfahren wiederverwendet wird.

25. Folienverbund (10) erhältlich durch ein Verfahren nach einem der Ansprüche 1 bis 24.

26. Verwendung eines Folienverbundes (10) nach Anspruch 25 zur Ummantelung oder zum Kaschieren.

## Claims

1. Method for producing a composite film (10) having a polyurethane-based reactive hot-melt layer with the aid of a coating apparatus (1), which contains the steps
a) optionally applying a primer onto a support material;
b) applying the polyurethane-based reactive hot-melt layer onto the primer or directly onto the support material;
c) applying a lacquer layer on the polyurethane-based reactive hot-melt layer in order to produce the composite film (10) on the support material;
d) optionally embossing the composite film (10) on the support material;
e) separating the composite film (10) from the support material.

2. Method according to Claim 1, **characterized in that** the primer is provided.

3. Method according to Claim 1 or 2, **characterized in that** the primer is used as a separating agent.

4. Method according to one of Claims 1 to 3, **characterized in that** the hot-melt layer and the lacquer layer are each applied in one coat.

5. Method according to one of Claims 1 to 4, **characterized in that** the reactive hot-melt layer has a thickness in the range of from 20 µm to 150 µm.

6. Method according to one of Claims 1 to 5, **characterized in that** the lacquer layer has a thickness in the range of from 5 µm to 25 µm.

7. Method according to one of Claims 1 to 6, **characterized in that** the application of the primer forms at least one colouring layer or an opacifying layer and is preferably a lacquer, in particular a UV-curing or a water-based or both a UV-curing and a water-based lacquer.

8. Method according to one of Claims 1 to 7, **characterized in that** the surface of the support material is provided with a reactivatable adhesive layer before the application of the primer, or this adhesive layer is used as the primer.

9. Method according to one of Claims 1 to 8, **characterized in that** a decorative layer is produced before step b), preferably by digital printing.

10. Method according to one of Claims 1 to 7, **characterized in that** the application of the primer is carried out using an applicator roller or slit die of the coating apparatus (1).

11. Method according to one of Claims 1 to 10, **characterized in that** the primer comprises an embossed structure and a decoration which is matched to the embossed structure is printed on, preferably after step b) and before step c).

12. Method according to one of Claims 1 to 11, **characterized in that** the support material is or at least contains a metal foil, a CPL laminate, melamine paper, separating paper, silicone-coated web material or a plastic film, in particular a plastic film.

13. Method according to one of Claims 1 to 12, **characterized in that** the support material has a thickness of from 30 µm to 400 µm.

14. Method according to one of Claims 1 to 13, **characterized in that** the support material is a conveyor belt of the coating apparatus (1).

15. Method according to one of Claims 1 to 14, **characterized in that** the application of the reactive hot-melt layer is carried out using an applicator roller with or without a smoothing roller or a slit die with or without a roll bar of the coating apparatus (1).

16. Method according to one of Claims 1 to 15, **characterized in that** the reactive hot-melt layer is a moisture-curing layer.

17. Method according to one of Claims 1 to 16, **characterized in that** the reactive hot-melt layer is a reactive polyurethane hot-melt, which is preferably obtainable from isocyanate-reactive polymers and polyisocyanates, and optionally additives.

18. Method according to one of Claims 1 to 17, **characterized in that** the embossing of the composite film (10) is provided.

19. Method according to one of Claims 1 to 18, **characterized in that** the embossing is carried out using an embossing roller of the coating apparatus (1).

20. Method according to one of Claims 1 to 19, **characterized in that** the separation of the composite film (10) from the support material is carried out by peeling after crystallization or full reaction of the reactive hot-melt layer.

21. Method according to one of Claims 1 to 20, **characterized in that** the reactive hot-melt layer contains at least one filler, in particular an abrasionresistant filler.

22. Method according to one of Claims 1 to 21, **characterized in that** the coating apparatus (1) is a roll-to-roll apparatus.

23. Method according to one of Claims 1 to 22, **characterized in that** the lacquer of the lacquer layer in step c) can be crosslinked by means of electron radiation or UV radiation.

24. Method according to one of Claims 1 to 23, **characterized in that** the support material is reused for the method.

25. Composite film (10) obtainable by a method according to one of Claims 1 to 24.

26. Use of a composite film (10) according to Claim 25 for cladding or for lining.

## Revendications

1. Procédé de fabrication d'un film composite (10) comportant une couche de masse fondue réactive à base de polyuréthane à l'aide d'une installation de revêtement (1), comprenant les étapes suivantes :
a) éventuellement l'application d'un apprêt sur un matériau support ;
b) l'application de la couche de masse fondue réactive à base de polyuréthane sur l'apprêt ou directement sur le matériau support ;
c) l'application d'une couche de vernis sur la couche de masse fondue réactive à base de polyuréthane pour produire le film composite (10) sur le matériau support ;
d) éventuellement le gaufrage du film composite (10) sur le matériau support ;
e) la séparation du film composite (10) du matériau support.

2. Procédé selon la revendication 1, **caractérisé en ce que** l'apprêt est prévu.

3. Procédé selon la revendication 1 ou 2, **caractérisé en ce que** l'apprêt sert d'agent de démoulage.

4. Procédé selon l'une quelconque des revendications 1 à 3, **caractérisé en ce que** la couche de masse fondue et la couche de vernis sont appliquées chacune en une seule couche.

5. Procédé selon l'une quelconque des revendications 1 à 4, **caractérisé en ce que** la couche de masse fondue réactive présente une épaisseur dans la plage de 20 µm à 150 µm.

6. Procédé selon l'une quelconque des revendications 1 à 5, **caractérisé en ce que** la couche de vernis présente une épaisseur dans la plage de 5 µm à 25 µm.

7. Procédé selon l'une quelconque des revendications 1 à 6, **caractérisé en ce que** l'application de l'apprêt forme au moins une couche colorante ou une couche donnant une opacité et est de préférence une laque, en particulier une laque durcissant aux UV ou une laque à base d'eau ou à la fois une laque durcissant aux UV et une laque à base d'eau.

8. Procédé selon l'une quelconque des revendications 1 à 7, **caractérisé en ce que** la surface du matériau support est pourvue, avant l'application de l'apprêt, d'une couche adhésive réactivable ou cette couche adhésive sert d'apprêt.

9. Procédé selon l'une quelconque des revendications 1 à 8, **caractérisé en ce qu'**une couche décorative est produite, de préférence par impression numérique, avant l'étape b).

10. Procédé selon l'une quelconque des revendications 1 à 7, **caractérisé en ce que** l'application de l'apprêt est effectuée au moyen d'un rouleau d'application ou d'une buse à fente de l'installation de revêtement (1).

11. Procédé selon l'une quelconque des revendications 1 à 10, **caractérisé en ce que** l'apprêt présente une structure gaufrée et, de préférence après l'étape b) et avant l'étape c), on imprime un décor qui s'adapte à la structure gaufrée.

12. Procédé selon l'une quelconque des revendications 1 à 11, **caractérisé en ce que** le matériau support est ou contient une feuille métallique, un stratifié CPL, un papier mélaminé, un papier de séparation, une bande revêtue de silicone ou un film plastique, en particulier un film plastique.

13. Procédé selon l'une quelconque des revendications 1 à 12, **caractérisé en ce que** le matériau support présente une épaisseur de 30 µm à 400 µm.

14. Procédé selon l'une quelconque des revendications 1 à 13, dans lequel le matériau support est une bande transporteuse de l'installation de revêtement (1).

15. Procédé selon l'une quelconque des revendications 1 à 14, **caractérisé en ce que** la couche de masse fondue réactive est appliquée par un rouleau d'application avec ou sans rouleau de lissage ou filière à fente avec ou sans barre de rouleau de l'installation de revêtement (1).

16. Procédé selon l'une quelconque des revendications 1 à 15, **caractérisé en ce que** la couche de masse fondue réactive est une couche durcissant à l'humidité.

17. Procédé selon l'une quelconque des revendications 1 à 16, **caractérisé en ce que** la couche de masse fondue réactive est une masse fondue de polyuréthanne réactive qui peut être obtenue de préférence à partir de polymères réactifs avec les isocyanates et de polyisocyanates et éventuellement d'additifs.

18. Procédé selon l'une quelconque des revendications 1 à 17, **caractérisé en ce que** le gaufrage du film composite (10) est prévu.

19. Procédé selon l'une quelconque des revendications 1 à 18, **caractérisé en ce que** le gaufrage est effectué par un rouleau de gaufrage de l'installation de revêtement (1).

20. Procédé selon l'une quelconque des revendications 1 à 19, **caractérisé en ce que** la séparation du film composite (10) du matériau support s'effectue par pelage après cristallisation ou réaction complète de la couche de masse fondue réactive.

21. Procédé selon l'une quelconque des revendications 1 à 20, **caractérisé en ce que** la couche de masse fondue réactive contient au moins une charge, en particulier une charge résistante à l'abrasion.

22. Procédé selon l'une quelconque des revendications 1 à 21, **caractérisé en ce que** l'installation de revêtement (1) est une installation rouleau à rouleau.

23. Procédé selon l'une quelconque des revendications 1 à 22, **caractérisé en ce que** le vernis de la couche de vernis peut être réticulé dans l'étape c) au moyen d'un rayonnement électronique ou d'un rayonnement UV.

24. Procédé selon l'une quelconque des revendications 1 à 23, **caractérisé en ce que** le matériau support est réutilisé pour le procédé.

25. Film composite (10) pouvant être obtenu par un procédé selon l'une quelconque des revendications 1 à 24.

26. Utilisation d'un film composite (10) selon la revendication 25 pour le gainage ou pour la stratification.
